Europäisches Patentamt

European Patent Office

Office européen des brevets

(11) Publication number: **0 414 347 A1**

# EUROPEAN PATENT APPLICATION

(21) Application number: **90306423.6**

(22) Date of filing: **13.06.90**

(51) Int. Cl.5: **G01N 1/32**, //B24B21/06

The title of the invention has been amended (Guidelines for Examination in the EPO, A-III, 7.3).

A request for correction of the pages 2, 10 and 11 and addition of a new page 2A has been filed pursuant to Rule 88 EPC. A decision on the request will be taken during the proceedings before the Examining Division (Guidelines for Examination in the EPO, A-V, 2.2).

(30) Priority: **15.06.89 GB 8913785**
**10.08.89 GB 8918302**

(43) Date of publication of application:
**27.02.91 Bulletin 91/09**

(84) Designated Contracting States:

AT BE CH DE DK ES FR GB IT LI NL SE

(71) Applicant: **BCIRA**
**Alvechurch**
**Birmingham, B48 7QB(GB)**

(72) Inventor: **George, Christopher Louis Francis**
**253 Pennine Road, Lowes Hill**
**Bromsgrove, Wors B61 0TN(GB)**
Inventor: **McCormack, William**
**35 Gunners Lane**
**Studley, Warwickshire B80 7LU(GB)**

(74) Representative: **Duncan, Angus Henry et al**
**Barker, Brettell & Duncan 138 Hagley Road**
**Edgbaston Birmingham, B16 9PW(GB)**

(54) **Belt grinding machine for analytical specimens.**

(57) A grinder for preparing analytical specimens in which the specimen (5) is ground by an abrasive belt (1). The belt (1) is mounted between pulleys (2) and may be driven by an electric motor. The specimen (5) is supported by a holder (6) which is mounted on a pivotal arm (7). A pressure device (12), which may be hydraulic, pneumatic or mechanical, urges the sample (5) against the belt (1). The faces of the sample (5) may be made parallel to the belt (1) by moving the pivot (11), or by an adjustable specimen holder (6). The unit may be provided with a slidable guard (16). Various sample holders for use with magnetic and non-magnetic specimens are also disclosed.

FIG.1.

EP 0 414 347 A1

# GRINDING ANALYTICAL SAMPLES

The present invention relates to the preparation of samples for spectrographic analysis. These samples may be of metallic or refractory material.

Samples of many metallic and refractory materials are subjected to analysis of composition using spectrographic methods. In the two most common types of equipment the analysis involves exciting the surface of a flat specimen to emit either ultra-violet or secondary X-rays in an instrument which can then analyse the emergent radiation. To carry out such analyses the specimen usually needs to be in the form of a small block or coin on which is prepared a flat face on which the analysis is carried out, by grinding prior to insertion into the analytical equipment.

The preparation of analytical samples of this kind requires the production of a high-quality, ground test surface, and this is usually achieved by placing the sample horizontally under a reciprocating grinding wheel which passes over the surface as many times as may be necessary to produce the required quality of surface or by a turning operation. The process of preparation of samples tends to be slow and difficult and requires considerable manual skill. Often, for X-ray analysis, further manual grinding is required. Frequently two parallel faces have to be ground on the specimen as part of the preparation.

Ferromagnetic metallic samples are usually supported on a magnetic device. For non-magnetic materials, purpose designed jigs or fixtures are required. Setting-up always presents some problems which require experienced and skilled operators to overcome.

The object of the present invention is to provide an apparatus and method for rapid and controlled preparation of samples for spectrographic analysis. The samples may be required in large numbers. This invention aims to make the sample easier to handle and will regularly produce more satisfactory results than is usually achieved by known methods.

According to the present invention there is provided a grinder for preparing an analytical sample comprising a holder for supporting the sample, an abrasive belt arranged such that, in operation, its abrasive surface faces and moves past the sample being ground, a pressure device for urging the holder towards the belt, such that the sample is pressed against the belt, and a pressure plate, arranged to bear against the belt, so us to resist the pressure applied to the belt by the sample.

The invention uses an abrasive belt as the grinding medium. The abrasive belt is manufactured from abrasive materials compatible with the subsequent analysis. The sample is supported in a holder to which access may easily be achieved for changing samples. The sample is pressed against the belt with a predetermined pressure by means of a pressure device which is adjustable, and controls the movement of the holder towards the belt. During grinding, the sample moves through a preset distance, the movement being controlled by the pressure device. The belt itself is supported on the reverse side by a pressure plate. This plate may be made of a material of low friction and good thermal conductivity, since considerable heat is generated by the grinding operation. In order to remove this heat the pressure plate may be mounted upon a heat sink which may, for example, be a chamber cooled by air or water circulation. An alternative is to make the pressure plate much wider than the belt, for example in the form of a disc which is allowed to rotate slowly so that at any instant, while one part of the disc is acting as the pressure plate, the remainder is exposed to the air for cooling it.

The sample holder is adjustable in such a way as to present the face of the sample parallel to the pressure plate so as to grind it uniformly and evenly. In a first arrangement the sample holder itself is held in a device which enables these adjustments readily to be made.

In an alternative arrangement, which is to be preferred if samples of different thicknesses are to be accommodated, a specimen holder is provided which can accommodate samples of varying thickness without the arm being forced to swing outwards. This arrangement helps to ensure that any sample may be ground with parallel faces, regardless of its thickness.

An embodiment of the present invention will now be described in detail, by way of example, with reference to the accompanying drawings in which:

Figure 1 is a schematic view of a sample grinder being an embodiment of the present invention;

Figure 2 and Figures 3 show examples of specimen holders for use with a sample grinder of the present invention;

Figure 4 and Figure 5 are side and front views of an alternative specimen holder for magnetic specimens;

Figure 6 and Figure 7 are side and front view of an alternative specimen holder for non-magnetic specimens; and

Figure 8 and Figure 9 are side and front views of a second alternative specimen holder for non-magnetic specimens.

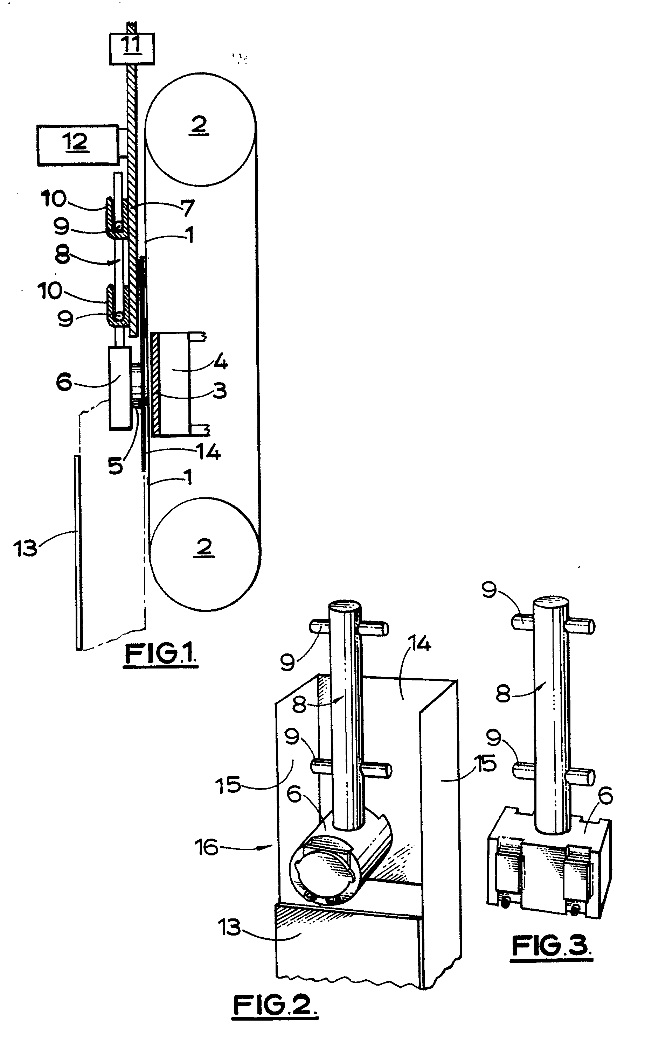

An example of the equipment is shown in Figure 1 and two examples of suitable specimen holders are shown in Figures 2 and 3. The abrasive belt 1 passes vertically over two pulleys 2, at least one of which is driven by a motor having sufficient power to avoid being stalled by the pressure of the specimen on the belt. Typically we use a 50 mm or 75mm wide belt with a 1.5 to 4.5 kW (2 to 5 horsepower) motor driving one of the pulleys. Various speeds, typically 20 to 40 m/s, can be achieved by suitable gearing or by the use of an invertor, suit the requirements of different kinds of metallic or non-metallic samples. The relatively small easily changed pressure plate 3 is of composition and structure chosen to provide maximum thermal conductivity and minimum wear. Wear will take place and, to accommodate this, the plate can be rotated to present a fresh surface. Thickness of the plate depends on the material being prepared and the heat generated. For high heat dissipation a thin 2mm disposable plate can be used. If little heat is generated a much thicker pressure plate, up to 20mm thick, will allow for refacing and multiple use, reducing operating costs. The pressure plate 3 is mounted tightly on a heat sink 4 which consists of a chamber through which is circulated air or water for cooling.

If the pressure plate 3 is in the form of a disc having a diameter equal to at least twice the width of the belt and is rotated slowly in use it may be possible to dispense with any forced cooling and instead rely on the exposure of half the disc to the surrounding air.

The specimen 5 is mounted on a specimen holder 6 by means of magnetic or mechanical clamping. This specimen holder is located positively into a suspending arm 7 by means of a vertical member 8 fitted with two cross members 9 which slot into sockets 10. The suspending member 7 is suspended through an adjustable device 11 by which the face of the specimen 5 can be maintained parallel with the face of the pressure plate 3. Pressure is exerted by a device 12 which may be a pneumatic, hydraulic or a mechanical device adjustable to provide the correct pressure between the specimen 5, the belt 1 and the pressure plate 3 to suit the material being ground.

Additional convenience can be achieved by arranging that the sample holder is located behind a door or shutter, the opening and closing of which initiates or stops the grinding activity by applying and releasing the pressure.

One possible arrangement of such a shutter is shown in Figs 1 and 2.

Referring first to Fig 2, the shutter 16 is generally tubular and comprises two vertical sides 15 which pass either side of the sample holder 6. The lower portion of the sides 15 are connected by a front plate 13, which lies in a plane between the sample holder and the operator, and the upper portions of the sides 15 are connected by a rear plate 14 which lies in a vertical plane between the abrasive belt 1 and the sample holder 6.

In a lowered position, the top of the front plate 13 is below the level of the sample holder 6, allowing the operator access for mounting and dismounting the sample 3. In this position, the rear plate 14 is between the sample holder 6 and the belt 1, and therefore significantly reduces the risk of the operator accidentally touching the belt 1. (although the belt motor is disabled when the shutter 16 is in the position, the belt may continue to run for some time after the motor current has been cut).

If the shutter 16 is then moved to a raised position, the upper plate 14 moves to a position above the sample 5, so that the sample 5 can come into contact with the belt 1. At the same time, the lower plate 13 moves to a position between the operator and the sample holder 6, thereby preventing access to the sample holder when the grinding operation is taking place. In its raised position, the shutter 16 also operates a switch to allow current to flow to the belt drive motor 2.

In operation the specimen holder is lifted out of its mountings and the specimen attached to it in a place convenient to the operator. It is then inserted in the suspending arm sockets; the belt need not be stopped for this purpose and pressure is then applied from the pressure-applying device. The time of the operation will depend upon the material being ground and the condition of the sample and will usually be less than 20 seconds. At the end of this time the pressure is released, the sample holder is removed and the sample is ready for removal and analysis. A new sample is then mounted in the sample holder and the procedure repeated.

Figure 2 shows a front view of a first type of specimen holder 6 carrying a disc-shaped specimen 5 on a magnetic pad (not visible in the drawing) and in Figure 3 there is illustrated a holder with two laterally spaced supporting magnetic pads for carrying a wider specimen. Where the specimen to be ground is not of ferromagnetic material, mechanical clamping means can be used.

Both the holders shown in Figures 2 and 3 are reversible, opposite faces being at different distances to allow for mounting thick or thin specimens without having to move the device 11 bodily towards or away from the belt, and without loss of parallelism of the prepared sample.

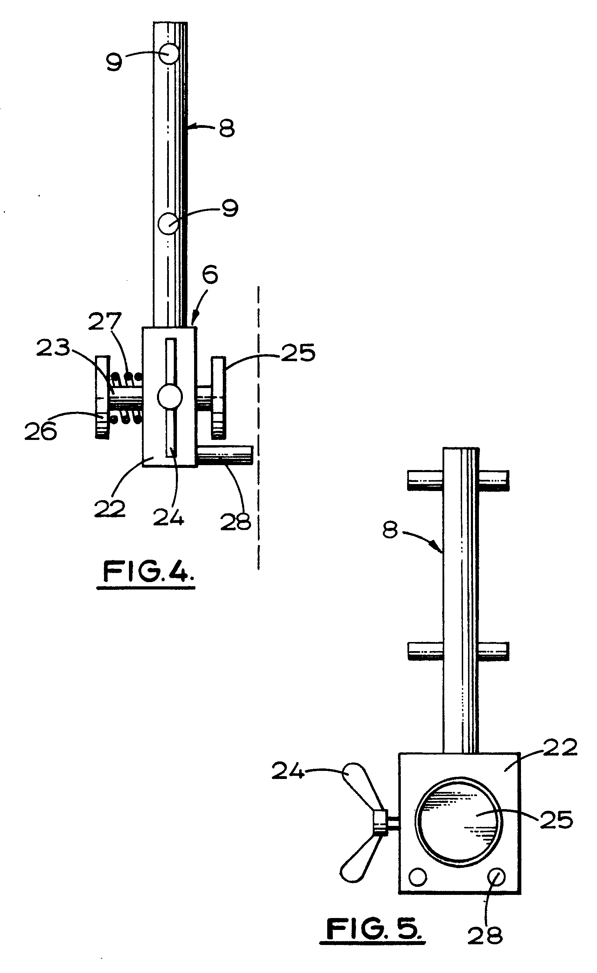

Figures 4 to 9 illustrate different versions of an alternative specimen holder. In each of them the specimen is pressed against the grinding belt, indicated by a dashed line, by means of a flat support 25. The position of the support relative to the main arm is adjustable so that with the arm always in the same position the space between the support 25 and the belt is equal to the thickness of the specimen.

The support 25 is attached to a sliding member 23 which passes through the body 22 freely until it is clamped in position by the clamp 24.

The rear end of the sliding member 23 carries another plate 26 parallel to the support plate 25, and a spring 27 retracts the sliding member and its two ends 25 and 26 away from the belt when the clamp is loosened.

Setting up is quick, simple and accurate. The specimen is first held between the back plate 6 and the body 22. With the clamp 24 loosened the back plate 6 is lightly pressed against the specimen so that the specimen acts as a spacer, and the clamp is tightened. The length of the sliding member 3 is designed so that the space between the back plate 6 and the body 22 is the same as the space between the specimen support 25 and the belt (shown as a dashed line). Once the specimen has been used to obtain the correct distance between the plate 26 and the body 22, it is slid out from that position and placed on the face of the supporting plate 25, when it is correctly spaced for pressing against the belt to obtain the ground finish. If a succession of samples of different thicknesses is used, then each is first used to set the position of the sliding member and its two ends, and it is then placed in position for grinding. If, however, all the specimens are uniform, then the position of the sliding member needs only to be set once for a group of specimens.

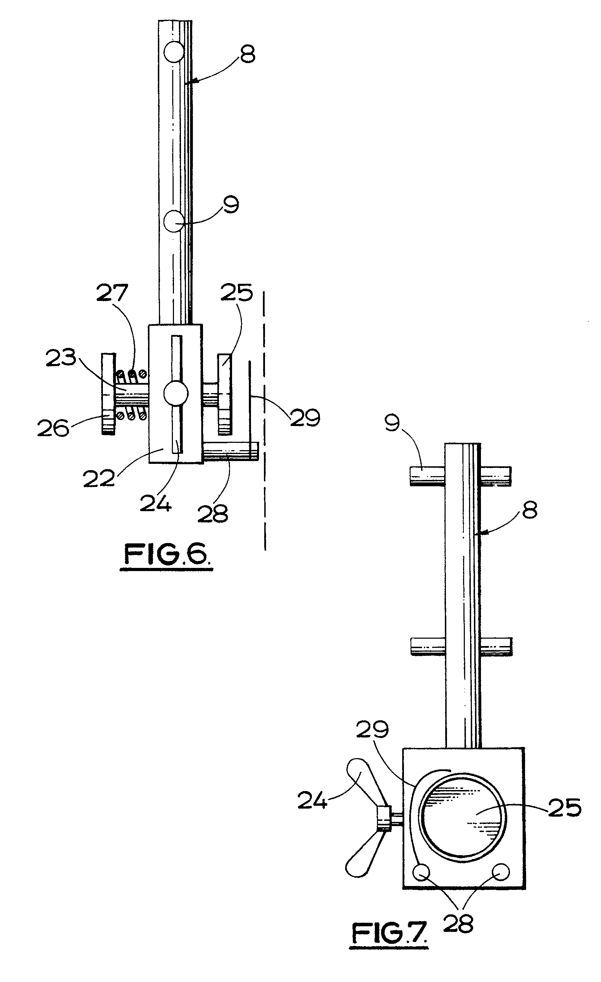

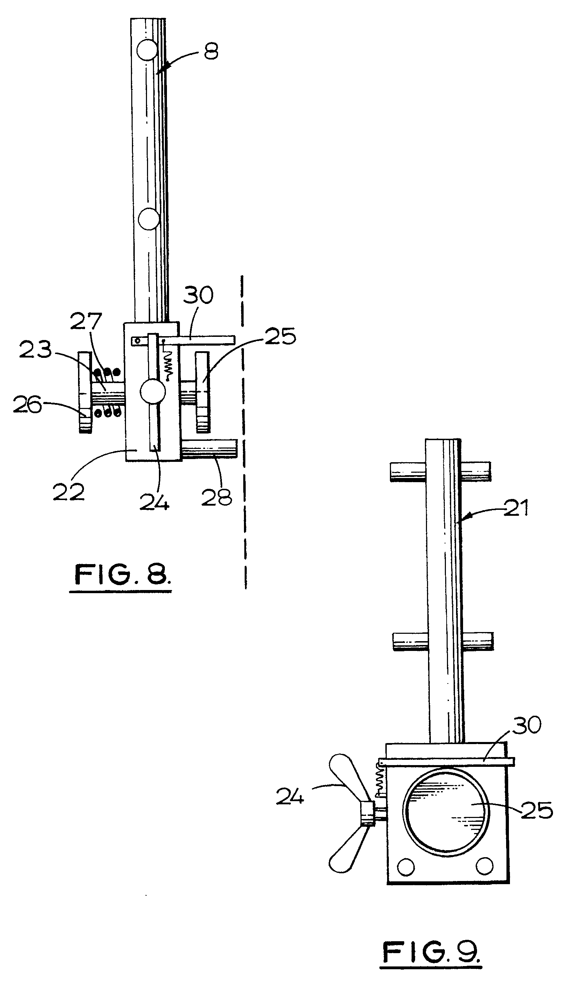

Two supporting pins 28 are used to stop the specimen from being carried downwards by the motion of the belt. In Figures 4 and 5 the support plate 25 is a magnet and may be used for supporting specimens of magnetic materials. Figures 6, 7 and 8, 9 show alternative methods of holding non-magnetic specimens. In Fig 6 a simple curved spring 29 applies pressure downwards at its point of contact with the specimen and holds the specimen against the pins until it is presented to the grinding belt. In Figs 8 and 9 a non-magnetic specimen is held downwards against the pins 28 by means of a spring-loaded frame 30. These alternative spring-loading devices are merely examples of ways in which a non-magnetic specimen can be held, and others could easily be devised to suit the shape of the edge of the specimen or other requirements.

The amount of metal removed during grinding is typically 0.5 mm, which represents the approximate movement towards the belt of the whole assembly head during the grinding of the specimen. This amount of movement on an arm of the kind which our instrument uses is sufficiently small to be negligible when considering the parallelism of the faces of the specimen.

It would be possible to construct a double unit with two belts running at the same or different speeds, both or either of them being wet or dry belts. This could be useful for a coarse pre-grind wet followed by a fine dry polish for either preparation of samples for spectrography or especially for preparation of samples for micrographic examination.

By means of device according to the invention a considerable improvement in speed and sample preparation quality is ensured and a variety of sizes and samples may be ground for different materials in rapid succession.

## Claims

1. A grinder for preparing an analytical sample (5) comprising a holder (6) for supporting the sample (5), an abrasive belt (1) arranged such that, in operation, its abrasive surface faces and moves past the sample being ground (5), a pressure device (12) for urging the holder (6) towards the belt (1) such that the sample (5) is pressed against the belt (1), and a pressure plate (3), arranged to bear against the belt (1), so as to resist the pressure applied to the belt (1) by the sample (5).

2. A grinder according to claim 1 in which the belt (1)is an endless belt, mounted between a plurality of pulleys (2) at least one of which is driven by a motor.

3. A grinder according to claim 1 or claim 2 in which the pressure plate (3) is mounted on or forms a heat sink (4).

4. A grinder according to any one of the preceding claims in which the pressure plate (3)has a diameter at least twice the width of the belt (1), and is rotated slowly in use.

5. A grinder according to any one of the preceding claims in which the holder (6) is releasably mounted on an arm (7), the arm being (7) supported on a pivot (11), such that the holder (6) may swing in a plane normal to the abrasive surface of the belt (1).

6. A grinder according to claim 5 in which the pivot (11) may be moved in a direction perpendicular to the abrasive surface of the belt (11), such that the faces of samples of different thicknesses may be mounted parallel to the surface of the belt (1).

7. A grinder according to any one of the preceding claims in which the specimen holder (6) comprises a specimen support (25) to which the specimen is attached, means by which the specimen support is attached to the arm (7), such that its position relative to the arm (7) may be adjusted in a direction parallel to the arm (7), and clamping means (24) by which the position of the specimen support (25) relative to the arm (7) may be fixed.

8. A grinder according to claim 7 in which the specimen holder (6) has a spring (27) which urges the specimen support (25) away from the belt (1) when the clamping means (24) is released.

9. A grinder according to claim 7 or claim 8 in which the specimen holder (6) has a second plate (26) fast with and spaced apart from the specimen support( 25), such that the distance between the second plate (26) and the clamping means (24) is equal to the distance between the specimen support (25) and the abrasive surface.

10. A grinder according to any one of the preceding claims in which the specimen (5) is attached to the specimen support (25) by a magnet.

FIG.1.

FIG.2.

FIG.3.

FIG.4.

FIG.5.

FIG.6.

FIG.7.

FIG. 8.

FIG. 9.

| DOCUMENTS CONSIDERED TO BE RELEVANT | EP 90306423.6 |
|---|---|

| Category | Citation of document with indication, where appropriate, of relevant passages | Relevant to claim | CLASSIFICATION OF THE APPLICATION (Int Cl⁵) |
|---|---|---|---|
| Y | US - A - 3 892 092 (KEITH) <br> * Abstract; fig. 1,4 * | 1,2,4 | G 01 N 1/32// B 24 B 21/06 |
| A | -- | 5 | |
| Y | US - A - 2 586 848 (MILLER) <br> * Claim 1; fig. 1,2 * <br> -- | 1,2,4 | |
| A | US - A - 2 139 952 (GILES) <br> * Fig. 2; claims * <br> -- | 3 | |
| A | DE - A1 - 2 903 962 (GOETZE) <br> * Fig.; claims * <br> ---- | 1,2,4, 10 | |

TECHNICAL FIELDS
SEARCHED (Int Cl⁵)

G 01 N
B 24 B

The present search report has been drawn up for all claims

| Place of search | Date of completion of the search | Examiner |
|---|---|---|
| VIENNA | 05-10-1990 | NARDAI |